Europäisches Patentamt

**European Patent Office**

Office européen des brevets

(19)

(11) Publication number: **0 009 922**

**B1**

(12)

# EUROPEAN PATENT SPECIFICATION

(45) Date of publication of patent specification: **14.10.81.**

(21) Application number: **79301988.6**

(22) Date of filing: **25.09.79**

(51) Int. Cl.³: **B 01 D 11/04,**
**C 01 B 25/46, C 22 B 60/02**

(54) Extraction process using stabilized emulsions.

(30) Priority: 04.10.78 US 948618
05.01.79 US 1326
10.01.79 US 2481
08.02.79 US 10457

(43) Date of publication of application:
16.04.80 Bulletin 80/8

(45) Publication of the grant of the European patent:
14.10.81 Bulletin 81/41

(84) Designated Contracting States:
AT BE CH DE FR GB IT NL SE

(73) Proprietor: OCCIDENTAL RESEARCH
CORPORATION
2100 S.E. Main Street
Irvine, California 92714 (US)

(72) Inventor: Stewart, Robert Daniel
17052 E. Cajon Avenue
Yorba Linda, California 92686 (US)

(74) Representative: Jack, Bruce James et al,
FORRESTER & BOEHMERT
Widenmayerstrasse 4/I
D-8000 München 22 (DE)

(56) References cited:
DE - A - 1 544 041
DE - A - 1 619 877
DE - A - 2 364 679
DE - A1 - 2 502 281
DE - A1 - 2 758 546
DE - C - 1 272 272
DE - C - 1 294 929
US - A - 3 637 488
US - A - 3 696 028
US - A - 3 740 329
US - A - 3 779 907
US - A - 3 956 112

JOURNAL OF APPLIED CHEMISTRY OF
U.S.S.R., Band 48, No. 9, 20 February 1976
New York

L.N. MOSKVIN et al: "Dialysis through a liquid
extraction membrane fixed on an inert porous
support" pages 2034 to 2037

Courier Press, Leamington Spa, England.

## Extraction process using stabilized emulsions

This invention concerns extraction processes for transferring at least one species between a fluid phase (liquid or gaseous) and a first liquid phase by contacting the fluid phase with an emulsion of the first liquid phase dispersed in a second liquid that constitutes a liquid permeable to the species to be transferred.

A classical method of extracting one or more species from a solution has been the use of a solid membrane that is selectively permeable with respect to such species. A solution containing the species is on one side of the membrane and a solution lean with respect to such species on the other. The species diffuse through the membrane by osmosis and the like until the species present in the solutions on the two sides of the membrane reach equilibrium.

Liquid-liquid extraction works on substantially the same principle, but is more flexible. A liquid phase ("extractant") which is immiscible in another liquid phase ("bulk phase") from which extraction is to occur and which contains a material selective towards the species to be extracted, is agitated in the bulk phase as a dispersed phase. After a period of contact, the two phases are allowed to separate and the liquid phase containing the extracted species is removed and stripped of the extracted species for recycle.

In the usual operation, a plurality of extraction cells are employed in series with the extractant flowing countercurrent to the bulk phase.

There has emerged a new field of technology involving liquid membrane extraction. Broadly, the principle involves surrounding either a liquid phase from which a species is to be extracted, or a liquid phase in which a species is to be collected, by a liquid membrane that is immiscible with the liquid phase. The surrounded liquid phase is called the internal phase and the liquid membrane is called the external phase. The internal phase, so surrounded by the external phase, is contacted with a fluid, liquid or gas, to or from which the species is to be transferred. If the fluid is a liquid, the external phase (liquid membrane) is immiscible with such liquid.

The bulk phase containing the species to be removed, whether the fluid or the internal phase, gives up the species to be extracted to the external phase from which it diffuses to the other ("stripping") phase. In the more sophisticated system, the species entering the stripping phase is converted to another form so that the stripping phase remains lean with respect to the extracted species to promote diffusion or species transport and to enable higher levels of extraction to occur.

Thus, the liquid membrane serves as an intermediary acting in the same way as an immiscible liquid in liquid-liquid extraction, except that it is constantly stripped of the species which it extracts by the liquid stripping phase.

Illustrative of the patents which have issued in the field of development and application of liquid membrane technology include U.S. Patents, 3,389,078; 3,410,794, 3,454,389; 3,617,546; 3,637,488; 3,650,091; 3,696,028; 3,719,590; 3,733,776; 3,740,315; 3,740,329; 3,779,907; 3,897,308; 3,942,527 and 3,969,265 and reissues.

U.S. Patent 3,779,907 is of particular interest, being directed to a process for removal of a dissolved species from aqueous solutions (bulk phase) which comprises contacting the bulk phase with an emulsion, the emulsion being characterized by having an external (continuous) phase that is immiscible in the bulk phase and the internal (disperse) phase, yet permeable to certain dissolved species. The internal phase contains a reactant capable of converting the extracted dissolved species to a non-permeable form. The liquid membrane (external phase) in addition to including an extractant for the species contained in the bulk phase is stabilized by a liquid or liquefied anionic, cationic, or nonionic surfactant.

Systems in which the liquid membrane contains a surfactant in liquid form have, on investigation, exhibited a low rate of extraction, while the surfactant may be subject to attack by reagents e.g. oxidants contained in the liquid membrane, the internal stripping phase and/or the bulk phase. This results in leakage of fluid through the liquid membrane with the consequence of partial or total collapse of the emulsion.

An extraction process in accordance with the invention is characterized by the feature that the emulsion with which the fluid phase is contacted to effect the required transfer is stabilized by the presence therein of at least one particulate solid that is substantially insoluble in and substantially nonreactive to the constituents of and contained in the said phases of the system.

Presently preferred particulate solids that we have successfully used to stabilize various first/second liquid phase emulsions to effect extractive transfer of species are fumed silica and carbon black. However, other solids may also be used and, for example, we have successfully used certain clays and their derivatives.

Preferably the transferred species is transformed on entering the phase to which it is being transferred, thereby to maintain such phase lean with respect to the transferred species. Conveniently, the transferred species may be converted to a form towards the liquid membrane (second liquid phase) is substantially impermeable, so as to prevent back- transfer of the species from the phase in which it is being collected. Moreover, mass action can be utilized to maintain a driving force by counter-transfer of a different species, such as by causing counter-transfer of hydrogen ion while transferring a metal ion such as the cupric ion.

The fluid phase may be gaseous or liquid: if the latter, the second liquid phase must be substantially immiscible in such liquid as well as in the first liquid phase.

When, as is preferred, the species is being transferred from the fluid phase to the first liquid (dispersed) phase of the emulsion, the duration of contact between the fluid phase and the emulsion may be such that the species is transferred to the first liquid phase during the period of contact. Alternatively, however, the duration of contact may be such as to allow the species to be transferred substantially only into the liquid membrane during the period of contact, transfer to the first liquid phase occurring subsequent to the said period of contact.

In preferred operation, the fluid phase and the first liquid phase are both aqueous in nature, while the second liquid phase (liquid membrane) of the emulsion is organic in nature.

In carrying out the process of the invention for the liquid-liquid extractions, the emulsion is preferably formed by dispersing the internal (first liquid) phase in an external (second liquid) phase which contains a particulate solid that selectively remains in the external phase in an amount sufficient to form an emulsion; the formed emulsion is then added to the bulk phase in which the emulsified droplets will be dispersed. The emulsified droplets are allowed to remain in the bulk phase for a time sufficient for extraction to occur and the emulsion is then separated from the bulk phase and broken to separate the internal phase from the external phase.

If the internal phase is the raffinate phase, it is replaced with a material to be extracted and the emulsion reconstituted for return to the system. If, however, the internal phase is the stripping phase, the extracted species are concentrated therein and may be recovered by breaking the emulsion and regenerating the stripping phase which is returned for further use. In either case the solids remain substantially unaffected, permitting repeated use.

Preferably, the external phase includes a specific extractant or transfer agent for the species to be transferred.

In appropriate cases, the emulsion may also include a surfactant, in addition to the particulate solid, to assist in stabilizing the emulsion.

The invention is further explained with reference to the accompanying drawings, in which:

Figure 1 illustrates one mechanism by which an emulsion of a first liquid (internal) phase in a second liquid (external) phase may be stabilized by particulate solids;

Figure 2 is a smear photomicrograph illustrating an emulsion of an aqueous internal phase (30 ml. of 10M $H_3PO_4$) in an organic external phase (20 ml of a solution of 30 g/l of mixed mono and dioctylphenyl phosphoric acids in paraffinic oil) stabilized by particulate fumed silica (0.2 g/20 ml external phase);

Figure 3 is a comparison smear photomicrograph at the same magnification as Figure 2 and illustrating the same system but where the organic external phase contains a liquid surfactant, (1% by wt. SPAN 80, Sorbitan Monooleate);

Figure 4 is a photomicrograph of droplets (dispersed in a bulk phase) of the emulsion of Figure 2, stabilized by particulate fumed silica;

Figure 5 illustrates another mechanism for particulate solids stabilization of an emulsion of an internal phase in an external phase;

Figure 6 is a smear photomicrograph illustrating an emulsion of an internal aqueous phase (20 ml of 10M $H_3PO_4$) in an external phase (20 ml of Exxon 200 solvent extracted coastal pale oil) stabilized by carbon black (0.2 g/20 ml external phase);

Figure 7 is a photomicrograph of droplets of the emulsion of Figure 6., dispersed in water;

Figure 8 is a photomicrograph showing the droplets of the emulsion of Figure 3 dispersed in water;

Figure 9 illustrates a solids-containing liquid membrane extraction system for extracting Uranium IV from an aqueous solution;

Figure 10 illustrates another solids-containing liquid membrane extraction system for extracting Uranium VI from an aqueous solution;

Figure 11 illustrates a uranium extraction curve using the solids-stabilized liquid membrane system of Figure 9; and

Figures 12 and 13 illustrate the results of a semi-continuous extraction operation as explained in Example 13 hereof.

The present invention provides an extraction system for the transfer of one or more species between a fluid phase and a liquid phase. The system consists of a bulk phase, an internal phase and an external phase. The internal phase is surrounded by the external phase which constitutes a liquid membrane and that contains at least one particulate solid capable of forming and stabilizing an emulsion of the internal phase in the external phase. The external phase is substantially insoluble in the internal phase and also substantially insoluble in the bulk phase where this is also a liquid. The particulate solids serve to stabilize the emulsion to prevent leakage of extracted constituents of the internal phase through the external phase into the bulk phase or vice versa. The external phase is permeable to the species to be extracted, either by its own nature or through the use of at least one extractant contained in the external phase.

Although the internal phase may be the liquid phase to be purified, i.e. containing species to be diffused through the external phase into the bulk phase, for most applications the species to be extracted (which can be an impurity) is contained in the bulk phase and diffused through the external phase into the internal phase. Whichever the arrangement, it is preferred that the extracted species be converted to one different in nature from that in which it existed in the phase from which it was extracted, so that the phase containing it will appear to the external phase lean with respect to the extracted species, to promote takeup by that phase of the species from the external phase. The external phase should preferably be impermeable with respect to the converted form of the extracted species.

Most representative of the systems involved are those in which the internal and bulk phases are aqueous in nature and the external phase is substantially organic in nature and immiscible in the aqueous phases, and the emulsion is stabilized by the presence therein of particulate solids which are substantially nonreactive with respect to constituents of or contained in the bulk phase, the internal phase and the external phase.

The predicate to carrying out the process of the invention is the formation of an emulsion of the internal phase in the external phase. For extraction of species from aqueous systems, this would be the formation of a water-in-oil emulsion. For extraction of species from organic systems, however, this would be the formation of an oil-in-water emulsion. The ability to transfer the emulsion to a liquid bulk phase with the formation in the bulk phase of discrete droplets of the internal phase surrounded by the solids-containing external phase is dependent on the ability of the solids to form and stabilize the initial emulsion.

The solids which may be used to form the stable emulsions may vary widely, and include, amongst others, fumed silica, organic-coated fumed silica such as silane-treated fumed silicas, coated and uncoated carbon blacks, coated and uncoated clays, micas and the like. The formation and stabilization of the emulsions may be assisted in suitable cases by the inclusion of a liquid surfactant.

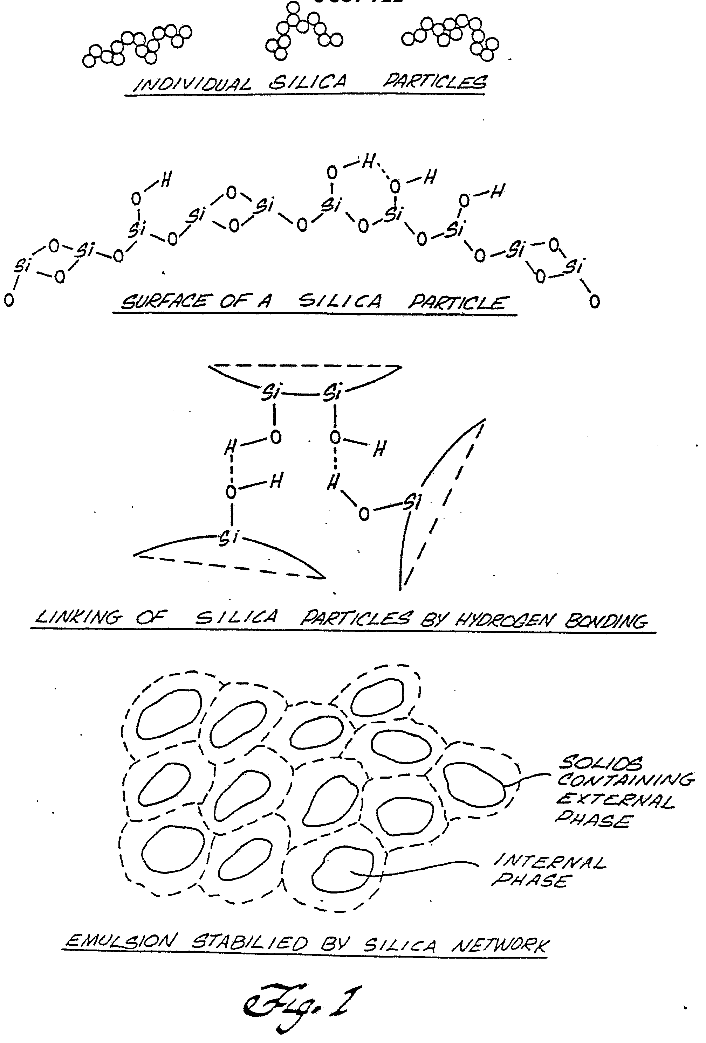

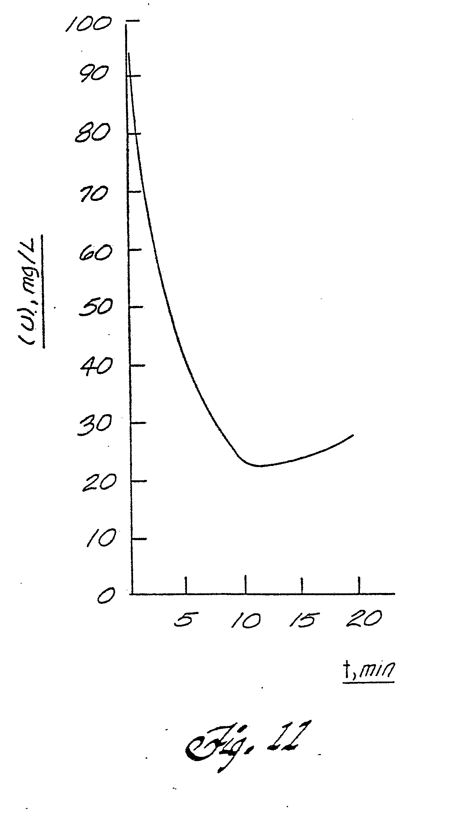

Without being bound by theory, there appear to be two mechanisms by which a stable emulsion is formed. One is by the formation in the external phase of a lattice work of the particles, bonded, for instance, by hydrogen bonds. This mechanism is depicted in Figures 1 and 10 and is derived from the teachings of Gabot Corporation as it pertains to the behaviour of Cab-O-Sil™ (fumed silica particles).

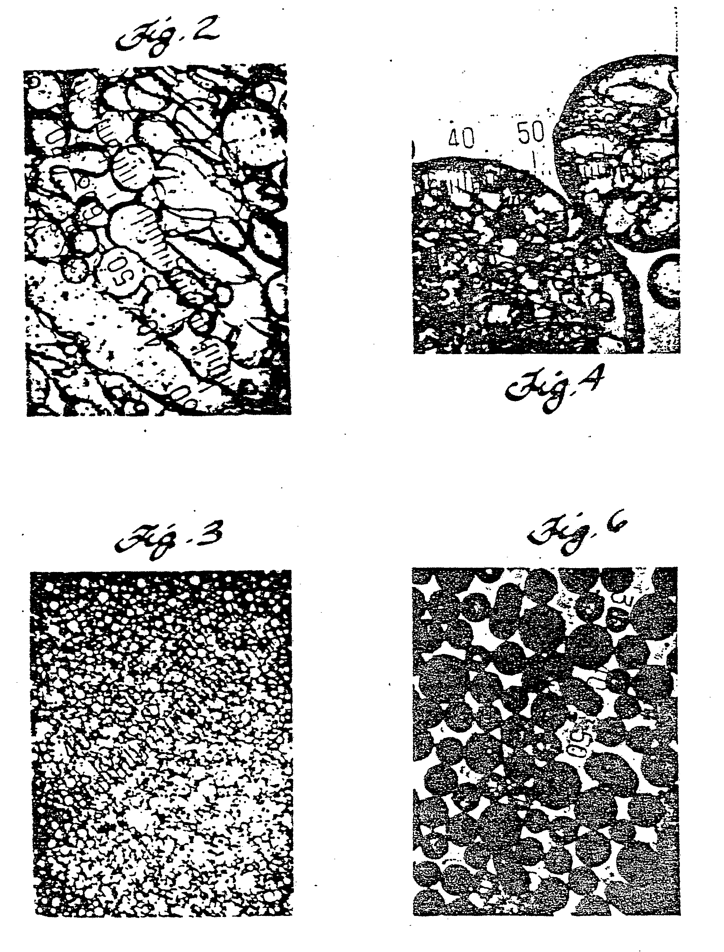

The difference between a water-in-oil emulsion as formed by particulate fumed silica (e.g. Cab-O-Sil brand from Cabot Corporation) and a water-in-oil emulsion as formed by a liquid surfactant alone is shown by the photomicrographs of Figures 2 and 3 which are emulsion smears. Both systems are designed for extraction of uranium.

In Figure 2, the ratio of the aqueous phase to the organic phase is 1.5. the organic phase containing a paraffinic based solvent. The extractant is a mixture of mono-and di-octyl-phenyphosphoric acids (OPAP). The solid is Cab-O-Sil™, grade MS-7.

In Figure 3, by contrast, the same organic phase contains Span 80™ (a sorbitan monooleate) where, again, the aqueous to organic ratio is 1.5. The globules formed by the Cab-O-Sil are substantially larger in size than those formed by Span 80™. In each instance, magnification of the emulsion smear is 110 times. Each division of the scale shown in these Figures is about 17 microns.

Figure 4 illustrates the emulsion of Figure 2 contained in an aqueous bulk phase of phosphoric acid in which uranium ion is the impurity, again magnified 110 times.

Another mechanism by which the emulsion could be stabilized is by a balance between the hydrophobic and hydrophillic properties of solids added as the emulsion stabilizer. This mechanism would appear to be applicable to carbon black and may be applicable to clays.

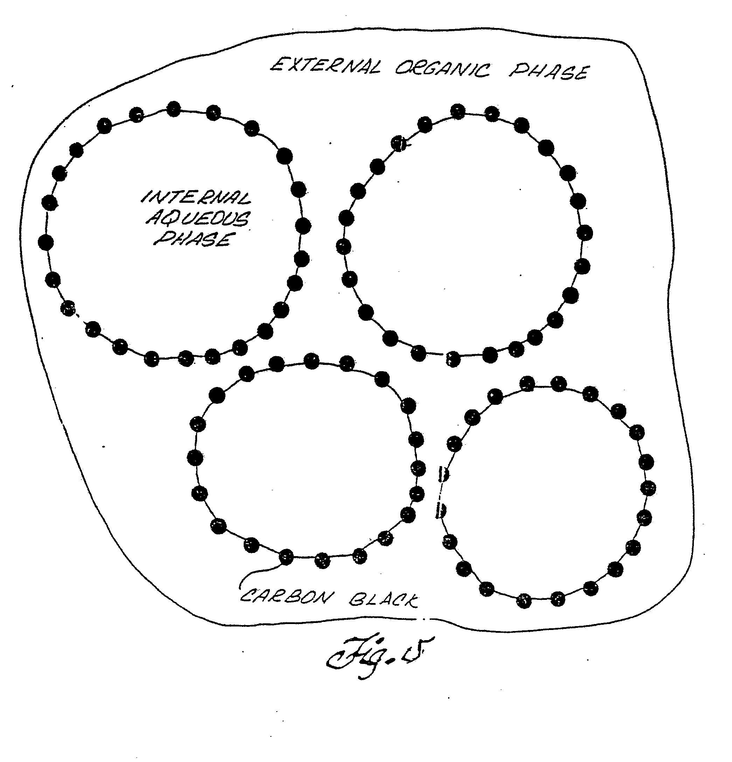

Figure 5 illustrates a water-in-oil emulsion in which particles of carbon black migrate towards the oil-aqueous interface with the higher hydrophobic potential of the carbon black causing the major portion of each particle to remain in the oil phase with some penetration of the particle into the aqueous phase.

For a reverse situation, namely where the internal phase is organic in nature and there is formed an oil-in-water emulsion, then the same mechanism as depicted in Figure 5 may apply in which the particles which are more hydrophilic remain in the water phase surrounding the internal oil phase and are prevented by their nature from entering the internal phase.

Figure 6 is a smear photomicrograph illustrating a stabilized emulsion in which the ratio of the aqueous phase to oil phase is unity and in which the solid present is carbon black. The internal phase is phosphoric acid.

Figure 7 is a photomicrograph of the droplets of Figure 6 dispersed in water.

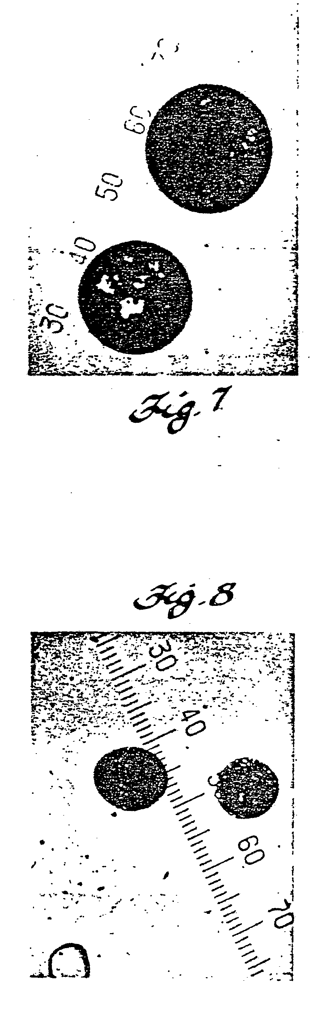

Figure 8 by reference is a photomicrograph of the droplets of the emulsion of Figure 3, in which the external phase contains sorbitan monooleate (Span 80) as a surfactant dispersed in a bulk phase phosphoric acid but magnified 275 times with each division of the illustrated scale representing approximately 7 microns.

In general, it has been observed, all other factors being equal, that the emulsion formed using a solid as the stabilizer, contains internal phase droplets of larger diameter than those formed with a liquid surfactant stabilizer, and the internal droplets of the emulsion once dispersed in the bulk phase remain also of larger size.

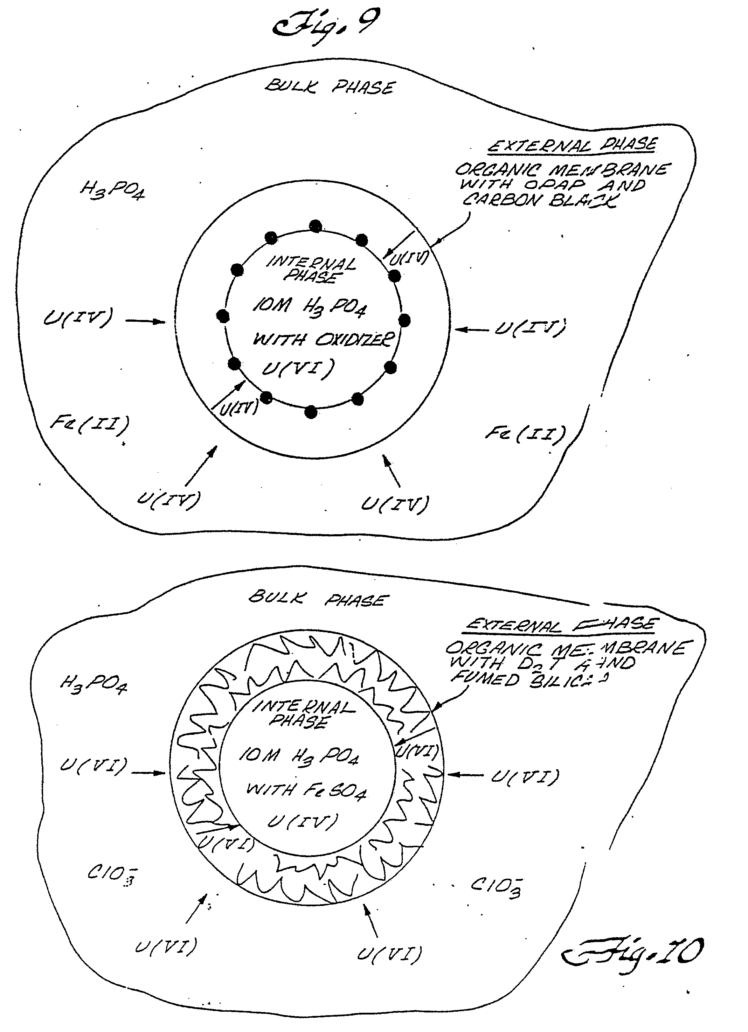

Figures 9 and 10 depict models of two extraction systems. Figure 9 is for the extraction of uranium in the +4 valence state from phosphoric acid which is contained in the bulk phase. Extraction is through an organic external phase which contains carbon black. The external phase strips the extracted uranium from the bulk phase. The uranium passes to the internal phase, where uranium is oxidized to the uranium +6 valence state.

Figure 10 illustrates an external phase stabilized by fumed silica. Uranium +6 is transferred from phosphoric acid to be reduced in the internal phase by a reductant (ferrous sulphate) to the +4 valence state.

The solids added, to be useful in liquid/liquid systems, must be capable of forming an emulsion of the internal phase in the external phase without loss of emulsion when transferred to a liquid bulk phase. To this end, amounts in the range of about 3 to about 30 grams per litre of the external phase have been employed. Particle size has ranged from 1 millimicron or less to 75 millimicrons or more. The amount and particle size will depend on the solid stabilizer selected.

The emulsion must, to some degree, be metastable since it is essential as part of the process eventually to recover what becomes the internal phase from the external phase. This is accomplished by separation of the emulsion from the bulk phase and breaking of the emulsion.

Breaking of the emulsion may be by action of heat, centrifuge, ultrasound and the like. This enables, for instance, the internal phase to be purified of the stripped species for reconstituting of the emulsion, as by agitation, for reuse.

Because the emulsion in its functional form is somewhat metastable, exposure time to the bulk phase may have to be limited. This is depicted in Figure 11, an extraction curve for recovery or uranium from phosphoric acid. The ordinate is uranium concentration in the bulk phase and the abscissa is time.

After a certain degree of extraction or loading of the internal phase, a reversal can normally be observed, after which the uranium concentration in the bulk phase increases. The minimum point is the point at which extraction should be terminated to prevent backflow of the extracted species through the external phase, and the emulsion separated and broken to remove extracted uranium from the internal phase to reconstitute the emulsion for reuse. Separation should occur at the minimum point of a predetermined extraction curve for a system. What is significant, however, is that the solid stabilizer for the emulsion is not lost by reaction or otherwise and the emulsion can be readily reconstituted for reuse.

For aqueous systems for which there is formed a water-in-oil emulsion, the organic phase will normally contain, in addition to the solids, an extractant selective for the species contained in the bulk phase.

For uranium, for instance, an extractant which may be contained in the external phase is a mixture of mono- and di-octylphenyl-phosphoric acids (OPAP). The extracted uranium +4 is drawn through the external phase into an internal phase or vice versa and oxidized by an oxidant such as hydrogen peroxide to the +6 valence state. Then the phase originally containing the oxidant will appear depleted in respect to uranium +4 to promote extraction of additional uranium +4 from the impure phase and its transmittal by the external phase to the provided stripping phase.

For extraction of uranium +6 and its reduction to uranium +4, the extractant which may be employed is the mixture ($D_2T$) of di-2-ethylhexylphosphoric acid (D2EHPA) and trioctylphosphine oxide (TOPO). A reductant for the internal phase may be ferrous sulphate.

Other impurities may be extracted by selective reagents. Di-tridecylamine, for instance, dissolved in a suitable organic solvent is functional for the extraction of vanadium, tungsten, and iron. Trilaurylamine is functional for the extraction of uranium and molybdenum. Tertiary amines containing from about 8 to about 10 carbon atoms in each attached hydrocarbon group are functional for the extraction of uranium, vanadium and chromium. Triiso-octylamine is functional for the extraction of cobalt and uranium.

Triisodecylamine is functional for the extraction of cobalt and uranium. Triisodecylamine is functional for the extraction of uranium and vanadium. Tri-tridecylamine is functional for the extraction of molybdenum, rhenium and uranium. The methyl ammonium chloride salt of tertiary amines containing from about 8 to about 10 carbon atoms in each hydrocarbon group attached to the nitrogen is functional for the extraction of vanadium, tungsten, chromium and uranium from neutral, as well as alkaline solutions. Oximes are functional for copper extractions. Dinonyl naphthalene sulphonic acids are functional for extractions of a variety of metals from acids such as phosphoric acid.

Organics useful to form the external phase where the bulk and the internal phases are aqueous in nature are normally mineral oils, which can be paraffinic as solvent neutrals, naphthenic oils such as coastal pales, solvent extracted neutral oils, hydrorefined or hydrogenated oils and the like. The criteria for the organics forming the external phase is the ability to transmit, or dissolve transfer reagents for, the extracted impurities. Generally, the viscosity and viscosity index of the oil to be used are determined by the temperatures in the extraction system. The aromatics content of the oil is generally chosen to provide the needed solubility for the extractant or transfer reagent but should not be so great as to cause instability, if used in an oxidizing system.

Other applications for the solid-stabilized extraction systems of the invention include the selected extraction of one or more hydrocarbons from one hydrocarbon phase into another hydrocarbon phase using an oil-in-water emulsion, such that the external phase is an aqueous phase. Other applications can involve the conversion of the extracted species into a precipitate or preferential separation or removal or organic compounds from aqueous phases and gases, enzymatic extractions and the like.

Other and more specific applications include separation of isomers and chlorotoluenes; removal or calcium and magnesium from brines to reduce hardness; removal of magnesium ions from wet process phosphoric acids; removal of sodium chloride from 10—30% caustic solutions; selective metal recovery from mixed metal solutions; extraction of copper or other metals from spent plating solutions; recovery of metal or cyanide from cyanide bearing nickel stripping solutions; recovery of nonnoble and noble metals from electrolytic plating and electroless plating solutions or from spent catalyst solutions; recovery of activator metals from spent solutions used in electroless plating and the like.

Many such applications are illustrated in more detail in the patents identified in this application. In the instance of gas purification, the gas is the bulk phase which passes through an emulsion of the internal phase in the external phase wherein the external phase is selective to one or more constituents in the gas phase and where the solids are relied on as providing stability between the external and internal phases.

Extractions may be carried out in single cell or multi cell systems.

While no wise limiting, the following examples are illustrative of the invention with the controls providing comparisons to systems where a liquid surfactant alone is employed as the stabilizing agent.

Control A

Uranium was extracted from phosphoric acid using a liquid surfactant-stabilized liquid membrane. A water-in-oil emulsion was made by stirring an aqueous solution consisting of 6.8 ml of 85% $H_3PO_4$ and 2 ml of 30% $H_2O_2$ diluted to 20 ml with water (stripping phase) into 20 ml of an organic solution made by dissolving 6.57 g of mixed mono-and-dioctylphenylphosphoric acids (OPAP) in paraffin oil to make 100 ml and adding as the surfactant 1.7 g Span 80™ (sorbitan monooleate). This mixture was stirred at about 1500 RPM for 10 minutes to emulsify the aqueous phase into the organic phase.

The emulsion this formed was stirred into 300 ml of 5M $H_3PO_4$ containing 102 mg/l uranium in the +4 oxidation state and 7.02 g/l ferrous ammonium sulphate (bulk phase). The ferrous ammonium sulphate was added to prevent oxidation of the uranium to the +6 state. The emulsion was dispersed in the phosphoric acid by moderate stirring and the acid was sampled periodically and analyzed for uranium.

After 5 minutes, 14% of the uranium had been extracted and no more extraction occurred. The experiment was stopped after 16 minutes as the emulsion had largely broken. After separation of the emulsion from the acid, the emulsion was broken by centrifugation and only 1.51 ml of the aqueous phase was recovered. It appeared the emulsion became unstable during the extraction, by reaction between the peroxide and the surfactant.

Control B

To increase stability of the emulsion of Control A, another run was done in which all conditions were the same except that the amount of surfactant in the organic phase was doubled. In this run, it was found that 13.4% of the uranium was extracted from the acid (bulk phase) in 10 minutes but that thereafter the uranium concentration in the bulk phase increased and after 20 minutes, the extraction was only 6.2%. It appeared this was due to leaking back into the bulk phase. The emulsion was separated and broken by centrifugation. A total of 14.5 ml of the internal aqueous phase was recovered.

Analysis of the recovered aqueous solution showed that it contained 190 mg/l of uranium. It was concluded that while uranium was extracted from the aqueous bulk phase and concentrated in the aqueous internal phase of the emulsion, recovery was poor and the emulsion lacked stability and the ability to retain the extracted uranium.

Example 1

A particulate solid rather than a surfactant was used to form and stabilize the emulsion. The organic phase of the emulsion consisted of a solution of 6.6 g OPAP dissolved in a paraffinic oil, Solvent Neutral 100™ (Exxon) to make 100 ml of solution. To 15 ml of this solution was added 0.075 g fumed silica (Cab-O-Sil™, grade M5, Cabot Corp.) This mixture was stirred at high speed for 3—4 minutes to disperse the solid, then 20 ml of 10 M $H_3PO_4$ containing 5 g/l $NaClO_3$ was added and the mixture was stirred for 10 minutes to form a stable emulsion. This emulsion was dispersed, with stirring, into 300 ml of 5M $H_3PO_4$ containing 110 mg/l uranium (IV) and 1 g/l $FeSO_4.7H_2O$ (the bulk phase).

The bulk phase was sampled periodically and analyzed for uranium. The uranium concentration decreased progressively throughout the experiment. After 55 minutes, when the experiment was terminated, the bulk phase contained only 10 mg/l uranium, thus indicating that 91%

of the uranium had been extracted from the bulk phase.

The emulsion was separated from the bulk phase and broken by heating. The recovered aqueous internal phase was found to contain 550 mg/l uranium, a concentration five times that of the original aqueous bulk phase.

## Example 2

Example 1 was repeated except that the aqueous bulk phase contained 93 mg/l uranium. The results were similar, showing a progressive decrease in uranium concentration in the bulk phase with 88% of the uranium being extracted in 45 minutes. Upon breaking the emulsion it was found that the aqueous internal phase contained 790 mg/l of uranium, a concentration 8.5 times that of the initial aqueous bulk phase.

## Example 3

Example 2 was repeated. Again, a progressive decrease in uranium was observed in the bulk phase. After 55 minutes 92% of the uranium had been extracted and the aqueous internal phase of the emulsion contained 1010 mg/l uranium, a concentration 10.9 times that of the initial aqueous bulk phase.

## Control C

In this control uranium was extracted from phosphoric acid by a liquid surfactant-stabilized liquid membrane utilizing a different uranium carrier than that used in the previous controls. An emulsion was made in which the organic (external) phase consisted of a solution containing 64 g/l di-2-ethylhexylphosphoric acid (D2EHPA), 19 g/l trioctylphosphine oxide (TOPO) and 18 g/l sorbitan monooleate (Span 80™), all dissolved in paraffin oil. The D2EHPA — TOPO combination, referred to hereinafter as $D_2T$, is a known combination which is effective in the extraction of uranium (VI) from phosphoric acid.

To 20 ml of this organic phase there was added as the stripping phase, with rapid stirring, 20 ml of 10 M phosphoric acid containing 50 g/l ferrous sulphate heptahydrate. This mixture was stirred for 10 minutes to form a stable emulsion.

The emulsion thus formed was dispersed, with moderate agitation, into 300 ml of 5 M phosphoric acid containing 100 mg/l uranium (VI) and 1 g/l sodium chlorate (bulk phase). The bulk phase was sampled periodically and analyzed for uranium.

Uranium concentration in the bulk phase decreased progressively until, after 30 minutes when the experiment was terminated, it had reached a concentration of 77 mg/l, indicating 23% extraction. The emulsion was separated from the bulk phase and broken by heating to approximately 80°C. The internal aqueous phase thus obtained was analyzed and found to contain 280 mg/l uranium, a concentration 2.8 times higher than was initially present in the bulk phase.

## Control D

In this control, the organic phase of the emulsion consisted of a solution of 133.2 g/l D2EHPA, 38.0 g/l TOPO and 18.8 g/l of Span 80™ in a paraffinic oil, Union Neutral™ grade 300 (Union Oil Co.). The aqueous internal phase of this emulsion was 10 M phosphoric acid containing 50 g/l ferrous sulphate. The two phases were emulsified by rapid stirring for 10 minutes and then dispersed in 300 ml of the same aqueous bulk phase used in Control C, except that the sodium chlorate concentration was 0.5 g/l. In this example, the aqueous bulk phase was maintained at a temperature of 40°C during the experiment.

After 60 minutes, the experiment was terminated and analysis of the bulk phase and the aqueous internal phase showed that 64% of the uranium had been extracted from the bulk phase and that the aqueous internal phase contained 990 mg/l uranium, a concentration 9.9 times higher than the initial concentration in the bulk phase.

## Example 4

In this example the organic phase of the emulsion was the $D_2T$ solution as used in Control D but with the Span 80™ omitted and replaced by 1 wt.% of fumed silica (Cab-O-Sil ™ grade M5, Cabot Corp.).

The fumed silica was dispersed in 20 ml of the organic phase by stirring at high speed for 10 minutes, then the aqueous internal phase (20 ml of the same aqueous internal phase as in Control D was added and stirring continued for an additional 10 minutes. The result was a stable water-in-oil emulsion made without a surfactant.

The emulsion was dispersed in 300 ml of the same bulk phase as in Control C again maintained at 40°C. A progressive decrease in the concentration of uranium was observed in the bulk phase. After 60 minutes, it was found that 59% of the uranium had been extracted from the bulk phase and that the aqueous internal phase of the emulsion contained 750 mg/l uranium, a concentration of 7.5 times higher than that of the initial bulk phase.

## Example 5

In this example, a combination of surfactant and solid stabilizer was used to stabilize the emulsion. The organic phase of the emulsion was the same as that used in Control D, but with the addition of the same amount of fumed silica as used in Example 4. The emulsion was prepared as in Example 4 and dispersed in a bulk aqueous phase of the same composition. In 60 minutes, 53% of the uranium had been extracted from the bulk phase and the internal phase contained 750 mg/l uranium, a

concentration 7.5 times higher than the original bulk phase.

## Example 6

In this example, carbon black was used as a solid, non-surfactant emulsion stabilizer. The organic phase consisted of a solution of 67.0 g/l. OPAP in Union 300 Neutral paraffinic oil. To 20 ml of this organic phase was added 0.2 g of carbon black (Vulcan XC-72R ™ grade, Cabot Corp.) and the mixture was stirred at high speed for 10 minutes to disperse the solid into the liquid phase. Then 20 ml of 10 M phosphoric acid containing 50 g/l of sodium chlorate was added and the stirring was continued for an additional 10 minutes. The result was a stable water-in-oil type of emulsion. It had previously been found that an aqueous internal phase containing this high a concentration of sodium chlorate would rapidly destabilize an emulsion made with a liquid surfactant (Span 80).

The emulsion was dispersed in 5 M $H_3PO_4$ containing 100 mg/l uranium and 1 g/l $FeSO_4.7H_2O$. The acid was maintained at a temperature of 40°C. Periodic sampling of the bulk phase showed a progressive decrease in uranium IV concentration and when the experiment was terminated after 10 minutes, the bulk phase contained only 38 mg/l uranium and the internal phase recovered after breaking the emulsion contained 790 g/l uranium. Thus, 62% of the uranium was extracted from the bulk phase and a concentration factor of 7.9 was achieved in the internal phase over the initial bulk phase.

## Example 7

This example was a duplicate of Example 6 except that the 20 ml of aqueous internal phase contained 5 g/l sodium chlorate, 15 ml of organic phase was used in 0.3 g of the carbon black was used to stabilize the emulsion. The bulk phase consisted of 300 ml of 5 M $H_3PO_4$ containing 97 mg/l uranium and 2 g/l $FeSO_4.7H_2O$. The emulsion was dispersed into the bulk phase, which was maintained at 40°C and sampled periodically.

As in Example 6, the uranium was progressively extracted from the bulk phase and transferred into the internal phase. After 10 minutes, 81% of the uranium had been extracted from the bulk phase and the internal phase contained 1370 mg/l uranium, a concentration 13.7 times higher than that of the initial bulk aqueous.

This example and Example 6 established that high rates of uranium extraction and high concentration factors can be obtained with solid-stabilized emulsions. Example 6 demonstrates that stable emulsions may be formed with solid stabilizers under conditions in which liquid surfactant-containing emulsions break rapidly.

## Example 8

This example illustrates a countercurrent two-stage extraction of uranium from phosphoric acid. All emulsions consist of an organic phase consisting of 66 g/l of OPAP dissolved in Union 300 Neutral™ oil and an aqueous internal phase consisting of 10 M $H_3PO_4$ containing 5 g/l $NaClO_3$. In each case 20 ml of the organic phase and 20 ml of the aqueous phase were used and the emulsions were stabilized by 0.20 g carbon black (Vulcan XC-72R™, Cabot Corp.). The initial aqueous bulk phase was 300 ml of 5 M $H_3PO_4$ containing 100 mg/l uranium and 3.33 g/l $FeSO_4.7H_2O$.

A 40 ml quantity of emulsion (Unit A) was first dispersed in 300 ml of bulk phase (Unit B) for 10 minutes, then the emulsion and the bulk phase were separated. In this contact 85% of the uranium was extracted from the bulk phase (Unit E).

Unit A was then dispersed for 10 minutes with fresh bulk phase (Unit C). At this time, it was found that 26% of the uranium was extracted from Unit C and that the internal phase of the emulsion (Unit A) contained 1750 mg/l uranium, a concentration 17.5 times that of the initial bulk phase.

Bulk phase (Unit B) was next contacted with fresh emulsion (Unit D) for 10 minutes, at which time it contained only 3.0 mg/l uranium. Thus, 97% of the uranium was extracted from bulk phase (Unit B) in two contacts with fresh emulsion.

Excellent uranium extraction and a very high concentration factor are thereby demonstrated in a two stage countercurrent system.

## Example 9

This example illustrates the extraction and concentration of copper from aqueous solution by a particulate solid-stabilized emulsion. The extractant used was LIX 64N™, an oxime manufactured and sold by General Mills as a copper extractant. The organic phase consisted of a 10 wt.% solution of LIX 64N in a paraffinic oil which was 250 Solvent Neutral, manufactured and sold by Exxon Corp. The solid stabilizer was Bentone 38™, an organic derivative of a montmorillonite clay manufactured and sold by N. L. Industries. The aqueous internal phase consisted of 150 g/l sulphuric acid in water.

An emulsion was made by dispersing 0.2 g Bentone 38™ in 20 ml of the organic phase by rapid stirring for 10 minutes and then adding 20 ml of the aqueous phase with continued stirring for an additional 10 minutes. The emulsion thus formed was dispersed into 300 ml of a copper sulphate solution containing 1.00 g/l copper, 16.67 g/l sodium acetate trihydrate and 10.0 g/l acetic acid. The copper solution (bulk phase) was sampled periodically and it was found that the copper concentration progressively decreased. After 75 minutes, the emulsion was separated from the bulk phase which was found to contain 0.66 g/l of copper. Upon breaking the emulsion by heating and subjecting the emulsion to ultrasonic vibratory energy an aqueous internal phase was recovered which was found to contain 5.60 g/l of copper. It is thus demonstrated that copper can be extracted from one aqueous solution and concentrated in a second aqueous solution by means of a solid-stabilized emulsion. It is also demonstrated that an emulsion useful for such an extraction can be stabilized by a treated clay.

Example 10

This example illustrates the extraction of metal ions from phosphoric acid by a solid-stabilized emulsion.

The organic phase of the emulsion was a solution of 17 g of dinonylnaphthalene-sulphonic acid and 6.0 g D2EHPA in 60 g of Union 300 Neutral™ and 17 g of Coastal Extracted Mineral oil (Exxon). The aqueous internal phase was 150 g/l $H_2SO_4$ in water. An emulsion was made by dispersing 0.57 g Tullanox 500™, an organically modified fumed silica manufactured and sold by Tulco, Inc. into 51.9 g of the above organic solution by stirring at high speed for 10 minutes. At this time, 50.2 g of the above aqueous solution was added and stirring was continued for an additional 10 minutes to form a stable emulsion. The emulsion was dispersed into 200 ml of a commercial fertilizer grade of phosphoric acid (aqueous bulk phase) which was sampled periodically. After 45 minutes, the emulsion was separated from the bulk phase and broken by subjecting it to ultrasonic energy and centrifugation. The recovered aqueous internal phase was analyzed. Results of the analyses are given in Table 1.

Table 1

| | MgO (g/l) | CaO (g/l) | U (mg/l) | $Fe_2SO_3$ (g/l) | $Al_2O_3$ (g/l) |
|---|---|---|---|---|---|
| **Bulk phase** | | | | | |
| initial | 4.51 | 0.631 | 56 | 10.1 | 10.7 |
| final | 3.81 | 0.463 | 47 | 8.49 | 8.29 |
| **Internal phase** | 4.06 | 0.497 | 37 | 7.13 | 7.77 |

These results show that metals can be extracted from phosphoric acid by solid-stabilized emulsions and transferred into the aqueous internal phase of the emulsion.

It is also demonstrated that an emulsion useable for this purpose can be stabilized with an organically-modified fumed silica.

Example 11

In this example, uranium was extracted from commercial fertilizer-grade phosphoric acid (Mg removed by solvent extraction) by a solid-stabilized emulsion containing $D_2T$ as the extractant. The organic phase of the emulsion consisted of 20 ml of a solution which contained 266.4 g/l D2EHPA and 76 g/l TOPO dissolved in Union Neutral 300 oil. The aqueous internal phase was a solution of 50 g/l ferrous sulphate heptahydrate in 10 M reagent grade phosphoric acid.

A 0.2 g quantity of fumed silica was dispersed in 20 ml of the organic phase and then 20 ml of the aqueous phase was added with rapid stirring to form a stable water-in-oil emulsion. The emulsion was dispersed into 300 ml of the fertilizer grade phosphoric acid to which had been added 0.2 g $NaClO_3$ at a temperature of 60°C. The phosphoric acid initially contained 57 mg/l of uranium.

After 60 minutes, the emulsion was separated from the bulk phase, which was now found to contain 17 mg/l uranium, showing that 70% of the uranium had been extracted from the acid. The aqueous internal phase was found to contain 300 mg/l of uranium, a concentration 5.3 times that initially present in the bulk phase.

Example 12

Example 11 was repeated except that the bulk phase contained 0.2 g of ammonium persulphate instead of sodium chlorate and the extraction was carried out at 40°C instead of 60°C. After contacting the emulsion with the bulk phase for 60 minutes, the concentration of uranium in the bulk phase had decreased to 42 mg/l from its initial value of 57 mg/l. It was thus demonstrated that 26% of the uranium had been extracted. Upon breaking the emulsion, 18 ml of aqueous internal phase was recovered which was found to contain 280 mg/l of uranium, thus demonstrating a concentration 4.9 times that initially present in the bulk phase.

Example 13

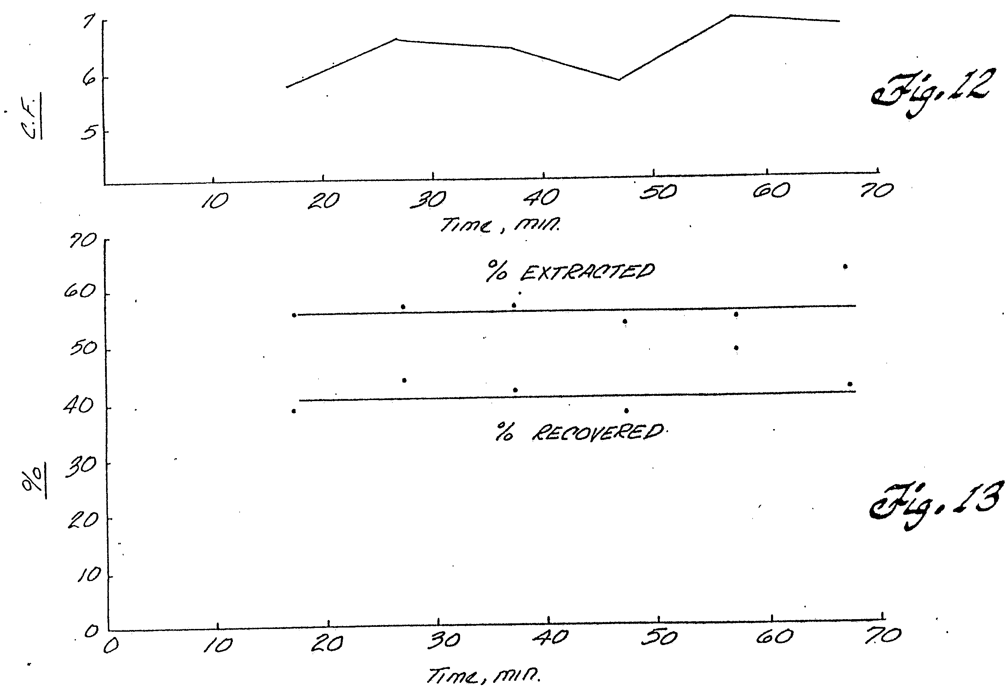

A semi-continuous run was performed using OPAP as the extractant for uranium (IV) introduced as an impurity to synthetic phosphoric acid to a concentration of 100 mg/l. In the operation, the emulsion was prepared by continuously mixing the aqueous internal phase in the organic external phase with agitation and continuous transfer of the formed emulsion to a stirred vessel to which the aqueous bulk phase was separately and continuously introduced. The emulsion and bulk phases were continuously withdrawn by liquid level overflow for analysis. Rates of feed of the aqueous bulk phase and the emulsion were adjusted to provide an average contact time of about 10 minutes. Figure 12 illustrates the concentration factor (CF), namely, the ratio of concentration of extracted uranium to concentration of uranium in the aqueous bulk phase as a function of time of operation. Figure 13 illustrates the percent of uranium extracted from the bulk phase and recovered from the internal phase also as a function of time of operation. The work established that uniform rates of extraction can be carried out with the operation.

Work in accordance with the invention has led to the observation that extraction can be best depicted as a second order kinetic equation having a rate constant $K_2$ expressed in 1/mg.min. For uranium extractions from phosphoric acids, rate constants from about $1.4 \times 10^{-4}$ to $45 \times 10^{-4}$ depending on the extractant employed and the degree of acid purity operated on. Some impurities, other factors being the same, tend to reduce the rate constant. Additional factors such as mechanical factors, complex formation and dissociation in the external phase, diffusion through the external phase and oxidation or reduction rates in the internal phase will also affect rate of extraction.

### Example 14.

For the solid-stabilized emulsion extraction of chromium, an organic phase consisting of symmetrical, straight chain alkyl, saturated tertiary amine wherein the alkyl groups are a $C_8$—$C_{10}$ mixture with the $C_8$ chain predominating (Alamine 336 from General Mills) dissolved in paraffin oil was emulsified with an aqueous internal phase of 3.5 N NaOH. Carbon black (Sterling R — Cabot Corp.) acted as stabilizer. The aqueous bulk phase contained 5.3 g/l chromium added as $CrO_3$. Forty ml of emulsion (ratio organic/aqueous = 1) was dispersed in 300 ml of bulk phase. During the first five minutes 11% of the chromium was extracted. After 15 minutes the analysis of the bulk phase was the same as at 5 minutes and thereafter the extraction reversed. Addition of 5 ml concentrated HCl after 70 min. of stirring again reversed the trend and 28 minutes later 22% of the chromium had been extracted (probably as $HCrO_4^-$). Approximately 30 ml of emulsion was recovered, the aqueous internal phase of which was found to contain 16.83 g/l Cr.

It was thus demonstrated that chromium can be extracted from an aqueous solution by a solid-stabilized emulsion and concentrated in the aqueous internal phase of that emulsion.

Similar results are obtained in this example when, instead of anionic chromium, the aqueous bulk phase comprises an anionic form of uranium vanadium, tungsten, molybdenum, zirconium, hafnium, niobium, tantalum, lanthanum, or of the rare earths, and where the aqueous internal phase contains a reagent which will convert the extracted, anionic, form into another form which will not have a substantial outward migration.

### Claims

1. An extraction process for transferring at least one species between a fluid phase and a first liquid phase by contacting said fluid phase with an emulsion of said first liquid phase dispersed in a second liquid phase that constitutes a liquid membrane permeable to the species to be transferred, characterised in that said emulsion is stabilized by the presence therein of at least on particulate solid that is substantially insoluble in and substantially nonreactive to the constituents of and contained in said phases.

2. An extraction process according to claim 1, further characterised in that said particulate solid is fumed silica.

3. An extraction process according to claim 1, further characterised in that said particulate solid is carbon black.

4. An extraction process according to claim 1, further characterised in that said particulate solid is a treated clay.

5. An extraction process according to claim 1, 2 or 3, further characterised in that said emulsion is additionally stabilized by the presence therein of a liquid surfactant.

6. An extraction process according to any preceding claim, further characterised in that the phase to which said species is transferred is kept lean with respect to said species.

7. An extraction process according to claim 6, further characterised in that the species entering the phase to which it is transferred is transformed into a different species towards which the liquid membrane is impermeable.

8. An extraction process according to any one of claims 1 to 5, further characterised in that a further species is counter-transported between the phases to provide mass action driving of the desired species transfer.

9. An extraction process according to any preceding claim, further characterised in that the said liquid membrane contains an extractant or transfer agent specifically active to transfer the desired species.

10. An extraction process according to any preceding claim, further characterised in that the fluid phase is a liquid in which said second liquid phase is immiscible.

11. An extraction process according to claim 10, further characterised in that said fluid phase and said first liquid phase are aqueous in nature.

12. An extraction process according to any preceding claim, wherein the species to be transferred is uranium.

13. An extraction process according to claim 12, further characterised in that uranium in one valence state in a bulk phase is transferred to a stripping phase and therein transformed into a different valence state.

14. An extraction process according to claim 13, further characterised in that the uranium is maintained in its +4 valent state in the bulk phase by a reductant therein and converted to its +6 valent state in the stripping phase by an oxidant therein.

15. An extraction process according to claim 14, further characterised in that the liquid membrane contains an extractant comprising a mixture of di-2-ethylhexylphosphoric acid and trioctylphosphine oxide.

16. An extraction process according to claim 14 or 15, further characterised in that said reductant is ferrous sulphate.

17. An extraction process according to claim 13, further characterised in that the uranium is maintained in its +6 valent state in the bulk phase by an oxidant therein and is converted to its +4 valent state in the stripping phase by a reductant therein.

18. An extraction process according to claim 17, further characterised in that the liquid membrane contains an extractant comprising a mixture of mono- and di-octylphenyl phosphoric acids.

19. An extraction process according to claim 18, further characterised in that said oxidant is sodium chlorate or hydrogen peroxide.

20. An extraction process according to any one of the preceding claims and wherein the species is to be transferred from said fluid phase to said first liquid phase, further characterised in that the fluid phase is contacted with the emulsion for a time sufficient to transfer the species into the liquid membrane, the emulsion and the fluid phase being then separated.

**Patentansprüche**

1. Extraktionsverfahren zum Übertragen wenigstens einer Substanz zwischen einer Fluidphase und einer ersten flüssigen Phase durch In-Kontakt-Bringen der Fluidphase mit einer Emulsion der ersten Flüssigphase dispergiert in einer zweiten Flüssigphase, die eine für die zu übertragende Substanz durchlässige Flüssigmembran bildet, dadurch gekennzeichnet, daß die Emulsion durch das Vorhandensein wenigstens eines partikelförmigen Feststoffes darin stabilisiert wird, der im wesentlichen in den die Phasen bildenden und darin enthaltenen Konstituenten unlöslich und diesen gegenüber im wesentlichen nichtreaktiv ist.

2. Extraktionsverfahren nach Anspruch 1, dadurch gekennzeichnet, daß der partikelförmige Feststoff Rauch-Siliziumdioxid ist.

3. Extraktionsverfahren nach Anspruch 1 dadurch gekennzeichnet, daß der partikelförmige Feststoff Ruß ist.

4. Extraktionsverfahren nach Anspruch 1, dadurch gekennzeichnet, daß der partikelförmige Feststoff behandelter Ton ist.

5. Extraktionsverfahren nach Anspruch 1, 2 oder 3, dadurch gekennzeichnet, daß die Emulsion zusätzlich durch das Vorhandensein einer flüssigen oberflächenaktiven Substanz darin stabilisiert wird.

6. Extraktionsverfahren nach einem der vorangehenden Ansprüche, dadurch gekennzeichnet, daß die Phase, auf welche die Substanz zu übertragen ist, bezüglich der Substanz arm gehalten wird.

7. Extraktionsverfahren nach Anspruch 6, dadurch gekennzeichnet, daß die Substanz, welche in die Phase, auf welche sie zu übertragen ist, eintritt, in eine unterschiedliche Substanz umgewandelt wird, gegen welche die Flüssigmembran undurchlässig ist.

8. Extraktionsverfahren nach einem der Ansprüche 1 bis 5, dadurch gekennzeichnet, daß eine weitere Substanz zwischen den Phasen in entgegengesetzter Richtung transportiert wird, um eine Massenwirkungskraft zum Antreiben der gewünschten Substanzübertragung zu gewährleisten.

9. Extraktionsverfahren nach einem der vorangehenden Ansprüche, dadurch gekennzeichnet, daß die Flüssigmembran ein spezifisch zum Übertragen der gewünschten Substanz wirksames Extraktions- oder Übertragungsmittel enthält.

10. Extraktionsverfahren nach einem der vorangehenden Ansprüche, dadurch gekennzeichnet, daß die Fluidphase eine Flüssigkeit ist, mit der die zweite Flüssigphase nicht mischbar ist.

11. Extraktionsverfahren nach Anspruch 10, dadurch gekennzeichnet, daß die Fluidphase und die erste Flüssigphase wässriger Natur sind.

12. Extraktionsverfahren nach einem der vorangehenden Ansprüche, dadurch gekennzeichnet, daß die zu übertragende Substanz Uran ist.

13. Extraktionsverfahren nach Anspruch 12, dadurch gekennzeichnet, daß Uran in einem Valenzzustand in fester Phase in eine Abstreifphase übertragen und in dieser in einen anderen Valenzzustand umgewandelt wird.

14. Extraktionsverfahren nach Anspruch 13, dadurch gekennzeichnet, daß das Uran in der festen Phase durch ein darin vorhandenes Reduktionsmittel im +4 Valenzzustand gehalten und in der Abstreifphase durch ein darin vorhandenen Oxidationsmittel in seinen +6-Valenzzustand umgewandelt wird.

15. Extraktionsverfahren nach Anspruch 14, dadurch gekennzeichnet, daß die Flüssigmembran ein Extraktionsmittel aufweist, welches eine Mischung von Di-2-Ethylhexylphosphorsäure und Trioctylphosphinoxid enthält.

16. Extraktionsverfahren nach Anspruch 14 oder 15, dadurch gekennzeichnet, daß das Reduktionsmittel Eisensulfat ist.

17. Extraktionsverfahren nach Anspruch 13, dadurch gekennzeichnet, daß das Uran in der festen Phase durch ein darin vorhandenes Oxidationsmittel in seinem +6 Valenzzustand gehalten und in der Abstreifphase durch ein darin vorhandenes Reduktionsmittel in seinen +4 Valenzzustand umgewandelt wird.

18. Extraktionsverfahren nach Anspruch 17, dadurch gekennzeichnet, daß die Flüssigmembran ein Extraktionsmittel aufweist, welches eine Mischung von Mono- und Di-Octylphenylphosphorsäuren enthält.

19. Extraktionsverfahren nach Anspruch 18, dadurch gekennzeichnet, daß das Oxidationsmittel Natriumchlorat oder Wasserstoffperoxid ist.

20. Extraktionsverfahren nach einem der vorangehenden Ansprüche, wobei die Substanz aus der Fluidphase in die erste Flüssigphase zu übertragen ist, dadurch gekennzeichnet, daß die Fluidphase mit der Emulsion für eine Zeit in Kontakt gebracht wird, die ausreicht, um die Substanz in die Flüssigmembran zu übertragen, woraufhin die Emulsion und die Fluidphase separiert werden.

**Revendications**

1. Procédé d'extraction pour transférer au moins un composé entre une phase fluide et une première phase liquide par contact de la phase fluide avec une émulsion de ladite première phase liquide dispersée dans une deuxième phase liquide qui forme une membrane liquide perméable aux composés à transférér, ce procédé étant caractérisé en ce que ladite émulsion est stabilisée par la présence en son sein d'au moins un solide particulaire qui est pratiquement insoluble dans les constituants de ladite phase et pratiquement non réactif avec ces constituants.

2. Procédé d'extraction selon la revendication 1, caractérisé en ce que ledit solide particulaire est de la silice fumée.

3. Procédé d'extraction selon la revendication 1, caractérisé en ce que ledit solide particulaire est du noir de carbone.

4. Procédé d'extraction selon la revendication 1, caractérisé en ce que ledit solide particulaire est de l'argile traitée.

5. Procédé d'extraction selon une quelconque des revendications 1, 2 ou 3, caractérisé en ce que ladite émulsion est en outre stabilisée par la présence en son sein d'un agent tensio-actif liquide.

6. Procédé d'extraction selon une quelconque des revendications 1 à 5, caractérisé en ce que la phase dans laquelle dedit composé est transféré est maintenue pauvre en référence audit composé.

7. Procédé d'extraction selon la revendication 6, caractérisé en ce que le composé entrant dans la phase dans laquelle il est transféré est transformeé en un composé différent vis-à-vis duquel la membrane liquide est imperméable.

8. Procédé d'extraction selon une quelconque des revendications 1 à 5, caractérisé en ce que un autre composé est transporté à contre courant entre les phases pour produire un effet d'entraînement de masse dans le transfert désiré du composé.

9. Procédé d'extraction selon une quelconque des revendications 1 à 7, caractérisé en ce que ladite membrane liquide contient un agent d'extraction ou de transfert specifiquement actif pour le transfert des composés désirés.

10. Procédé d'extraction selon une quelconque des revendications 1 à 9, caractérisé en ce que la phase fluide est un liquide dans lequel ladite seconde phase liquide est non miscible.

11. Procédé d'extraction selon la revendication 10 caractérisé en ce que ladite phase fluide et ladite première phase liquide sont de nature aqueuse.

12. Procédé d'extraction selon une quelconque des revendications 1 à 11, caractérisé en ce que le composé à transférer est l'uranium.

13. Procédé d'extraction selon la revendication 12, caractérisé en ce que l'uranium présent en un état de valence donné, en phase brute est transférér vers une phase d'entraînement où on lui confère un état de valence différent.

14. Procédé d'extraction selon la revendication 13, caractérisé en ce que l'uranium est maintenue dans son état de valence +4 en phase brute grâce à un agent réducteur contenue dans celle-ci et converti en son état de valence +6 dans la phase d'entraînement grâce à un agent oxydant présent dans cette dernière.

15. Procédé d'extraction selon la revendication 14, caractérisé en ce que la membrane liquide contient un agent d'extraction consistant en un mélange d'acide et d'oxyde de trioctylphosphine.

16. Procédé d'extraction selon la revendication 14 ou 15, caractérisé en ce que l'agent de réduction est le sulfate ferreux.

17. Procédé d'extraction selon la revendication 13, caractérisé en ce que l'uranium est maintenu dans son état de valence +6 en phase brute grâce à un agent oxydant présent dans celle-ci et est converti en son état de valence +4 dans la phase d'entraînement grâce à un agent réducteur présent dans cette derniere.

18. Procédé d'extraction selon la revendication 17, caractérisé en ce que la membrane liquide contient un agent d'extraction consistant en un mélange d'acides mono- et di-octylphényl phosphoriques.

19. Procédé d'extraction selon la revendication 18, caractérisé en ce que ledit oxydant est le chlorate de sodium ou le peroxyde d'hydrogène.

20. Procédé d'extraction selon une quelconque des revendications 1 à 19, dans lequel le composant est transféré de la phase fluide à la première phase liquide précitées, ce procédé étant caractérisé en ce que la phase fluide est mise au contact de l'émulsion pendant une durée suffisante pour permettre le transfert du composé dans la membrane liquide, l'émulsion et la phase fluide étant alors séparés.

**0 009 922**

INDIVIDUAL SILICA PARTICLES

SURFACE OF A SILICA PARTICLE

LINKING OF SILICA PARTICLES BY HYDROGEN BONDING

SOLIDS CONTAINING EXTERNAL PHASE

INTERNAL PHASE

EMULSION STABILIED BY SILICA NETWORK

Fig. 1

1

Fig. 2

Fig. 4

Fig. 3

Fig. 6

*Fig. 5*

Fig. 7

Fig. 8

Fig. 9

BULK PHASE

EXTERNAL PHASE
ORGANIC MEMBRANE
WITH OPAP AND
CARBON BLACK

$H_3PO_4$

INTERNAL PHASE
$10M\ H_3PO_4$
WITH OXIDIZER
$U(VI)$

$U(IV)$ →   ← $U(IV)$

$U(IV)$

$Fe(II)$   $Fe(II)$

$U(IV)$     $U(IV)$

BULK PHASE

EXTERNAL PHASE
ORGANIC MEMBRANE
WITH $D_2$T AND
FUMED SILICA

$H_3PO_4$

INTERNAL PHASE
$10M\ H_3PO_4$
WITH $FeSO_4$
$U(IV)$

$U(VI)$ →   ← $U(VI)$

$U(VI)$

$ClO_3^-$   $ClO_3^-$

$U(VI)$     $U(VI)$

Fig. 10

Fig. 11

Fig. 12

Fig. 13

% EXTRACTED

% RECOVERED

C.F.

%

Time, min.

Time, min.

0 009 922